# EUROPEAN PATENT APPLICATION

(11) **EP 3 205 621 A1**
(43) Date of publication of application: **16.08.2017**
(21) Application number: 15849414.6
(22) Date of filing: 06.10.2015
(51) Int. Cl.: B68B 1/06, A01K 15/00

(54) **WORKING HEADSTALL FOR HORSES**

(30) Priority: 06.10.2014 ES 201431291 U
(71) Applicant: Casado Saez, Alfonso, 19300 Molina De Aragón (Guadalajara) (ES); Sanchez Martinez, Constantino, 28770 Colmenar Viejo (Madrid) (ES)
(72) Inventor: Casado Saez, Alfonso, 19300 Molina De Aragón (Guadalajara) (ES); Sanchez Martinez, Constantino, 28770 Colmenar Viejo (Madrid) (ES)
(86) International application number: PCT/ES2015/070725
(87) International publication number: WO 2016/055679

(57) **Abstract**

The invention relates to a working headstall for horses, formed by two identical directional-force-transmitting pivot levers (1), each pivot lever being joined to a corresponding plate (6) and connected to the other by a transverse bar or bit (5). The S-shaped directional-force-transmitting pivot levers (1) have a short arm (1A) and a long arm or shank (1 B) joined by a curved central section (1 C) or pivot point having three aligned eyelets (2). The long arm or shank (1 B) is equipped with a central oval through-hole (8) and another end through-hole (3) through which the reins are passed, while the short arm (1A) is equipped with an end bore (4) in which the shaft of the transverse bar or bit (5) is permanently secured, said transverse bar or bit comprising a central bulge or protuberance (9). The plate (6) comprises rectangular perforations (7) strategically positioned for the passing through of straps for securing to the horse, particularly a half noseband (A), curb strap (B), and cheekpiece (C); and a through-hole for a nut that secures the plate (6) to the directional-force-transmitting pivot lever (1).

## Description

### Subject matter of the Invention

The present invention relates to a working headstall for horses which, due to its conformation, characteristics and applications, improves the mouthpieces for horses, bits and fillets existing in the market and everything that is part of the corresponding state of the art.

This invention aims the way of regulating the position of the horse's head and to help control transitions, direction and recoil by a pulling force and without resorting to compressive force.

### Prior art

It is obvious that riding, both in professional practice and amateur and in any of its many specialties and fundamentally in dressage, implies an extremely direct relationship between rider and equine. It is the rider who must control and direct all the movements of the horse, to establish at what pace it advances (step, trot, gallop), at what speed, in what direction, when to advance, when to stop, etc. To achieve this, the essential instrument or rig is the bridle, i.e. the set of working headstall, bit and reins, which are, in fact, the tool immediate communication between horse and rider and operated from the pressure and force exerted by the rider and that transmits the horse through the mentioned set.

Currently, the working headstall and the mouthpieces are essential parts, in particular the bit or the fillet since these are the pieces that are placed inside the horse's mouth and responsive to the force exerted by the rider. There are different designs and models of bits and fillets and generally exert a lever effect that multiplies the strength of the rider and are rigid, although there are also articulated versions. Precisely, the hardness of the mouthpieces, being located inside the mouth of the horse and being metallic, tends to cause wounds and injuries in the animal as any movement and / or displacement of the reins affects movement bit / fillet.

At industrial property level, there are several patents that develop different types of the working headstall, bits, fillets and brakes. The utility model U9601624 presents an improved bit for horses that is limited to a *"mouthpieces obtained in stainless steel, endowed in its ends of steps for the coupling to lateral parts carrying the rings and other means integrant of the own bit." On the other hand, the utility model U200930587 develops a bit for horses characterized by "being made entirely of plastic materials while being formed by several pieces joined together with relative mobility between them, these extreme fastening pieces being where hook the reins, while such pieces are associated with each other by at least one central tie rod, so that their connection with the end holding pieces is a fastening that permits mobility between them."* The invention patent ES2211185 (T3) relates to a bit for horses with two side rings and a barrel which modifies the angles of relation between them. The invention patent P200802130 develops a direct action bit for horses braking consisting of two legs and a mouthpieces which has as main characteristic to have a direct action on the gingival of the horse by acting as a first-class lever. Lastly note invention patent ES2374387 (T3) which refers to a horse pivotal bit provided with a braking system which combines a conventional articulated mouthpieces as a rigid conventional one.

Obviously, the documents cited and many of the existing mouthpieces on the market fulfill their function of regulating and controlling the horse movements, but mostly are items that provide improvements based on existing structures without providing innovative technical solutions. Many of the models use as a tool of communication with the horse the force by compression, as previously mentioned, and that entails to cause forced damage to the animal by directly affecting points and sensitive areas of its mouth.

The applicants understand, therefore, that there should be a kind of working headstall with bit which is substantially different in shape, intuitive to use, easy to place, fully effective, non-injurious and comfortable for the horse and which, in particular, participates in active form in the dressage of the animal, obtaining better and faster results by minimizing the damage on the horse.

### Aim of the invention

Thus, this invention relates to a working headstall for horses which introduces substantial changes in its conformation and, consequently, in its use.

The working headstall is formed on the basis of an essential piece that is paired with another identical piece, being united both by means of the bit and associated to a half noseband and a curb strap by means of plates.

This basic part is a directional-force-transmitting pivot levers having a differential structure, similar to an "S" shape, with a short arm that holds the bit, a curved central section that acts as pivot point and a long arm acts as a shank. Both directional-force-transmitting pivot levers are linked together by means of the bit, formed by a flexible or rigid transverse bar. Both levers have three aligned holes or pivot points in their central curved section, all of which are capable of holding a preferably rectangular plate which in turn has several strategically distributed and positioned rectangular perforations. The long arm of each lever has a through hole of larger diameter at its end and a second oval hole in its central part. The short arm of each lever has a bore to seat the shaft of the flexible / rigid transverse bar or bit. Both the levers and the bars are metallic and of little thickness.

The transverse bar or bit which joins the two levers is preferably flexible to distribute the uniform pressure and is in fact placed in a floating position on the horse's mouth according to the angle of position that the levers adopt in response to the force exerted by the rider. This bit is likely to be rigid. In both shaping options, the transverse bar is capable of presenting a central bulge that presses the tongue to prevent it from passing over the bit.

In practice, the described levers are positioned as inverted levers, exerting a vertical pressure. The "S" shape of the levers allows them to make a 180° turn so that the moment of force rests on the noseband. Furthermore, being able to fix the plate in one of the three eyelets present in the a curved central section of the lever implies to obtain and to be able to vary between three positions or points of rotation in 70°, 90° and 120° according to what work is wanted to do with the horse and how to position the animal's. All the forces are performed from top to bottom, which implies a change in the moments of the force, acting this working headstall by tensile forces and not by compression. With this working headstall, the moments of forces are in the points of the noseband (i.e., the strap that passes over the nose pressing the nasal bone and closing with a buckle with the curb strap) and the bit itself. The curb strap, in this case, does not make any kind of pressure but acts on the noseband so that it does not rise and the bit does not back down. The noseband modifies its conformation since it is only half piece.

In order to join the working headstall with the noseband, the curb strap and the cheekpiece, the levers described are linked with the plates also described since these straps are threaded and cross the rectangular perforations in the said plates.

On the other hand, the reins are threaded into the through holes and into the central through holes in the shank of each of the levers.

The fixing of the rectangular plates in one of the eyelets present in the levers is realized by means of a nut or similar, being able to fit them in one or another eyelet according to the to the needs of each horse saddle or the dressage exercise, training or activity is going to be performed

### Description of the drawings

For a better understanding of what is described herein, a set of drawings are attached, which should only be analysed and considered as examples, with no intention to limit or restrict.
Figure 1.- Shows a view of the set of lever and plate
Figure 2.- Shows a view of the working headstall
Figure 3.- Shows a view of full working headstall with straps scheme.
Figure 4.- Shows a view of the working headstall adjusted to the head of a horse

### Detailed disclosure of the invention in a preferred realization

According to these drawings, the object of this utility model is a working headstall for horses with an advantageous structure and conformation to exert a more balanced and uniform force and with 3 pivot points.

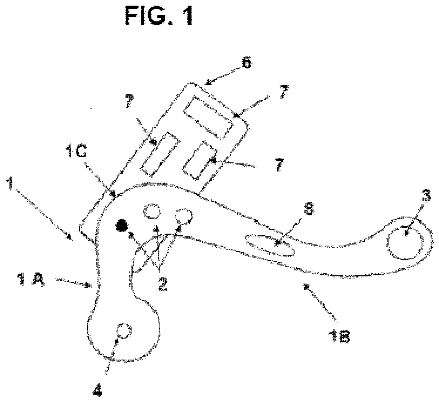

Figure 1 shows the base piece of the new working headstall, formed by a directional-force-transmitting pivot levers (1) similar to an "S" shape, with a short arm (1A) and a long arm or shank (1B) with a curved central link section (1 C) acting as a pivot point. Each of these sections or parts of directional-force-transmitting pivot levers (1) has different perforations which fulfil different functions. The central curved link section (1 C) has three aligned eyelets (2) or pivot points for holding a plate. The long arm or shank has an oval hole (8) in its central area and a second through-hole (3) at its end, both of sufficient diameters to thread straps and reins. The short arm (1A) shows a bore (4) in which the shaft of the transverse bar or bit (5), visible in the following figures, is set.

Accordingly, each of the three aligned eyelets (2) located in the curved central link section (1C) of the directional-force-transmitting pivot levers (1) are anchoring points, by means of a nut or the like, of a plate (6) substantially rectangular which in turn has several perforations (7) also rectangular strategically distributed and positioned as well as a through hole in which the nut which allows this plate (6) to be attached to the directional-force-transmitting pivot levers (1).

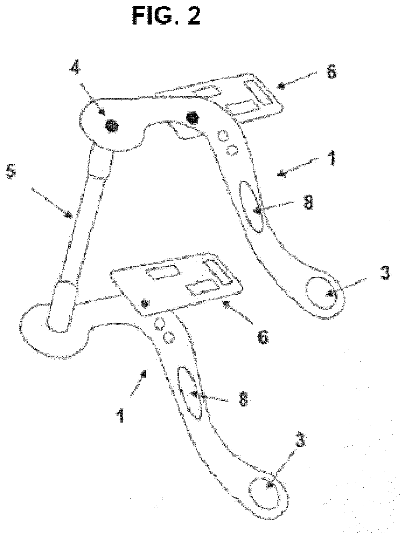

In figure 2 the claimed working headstall is shown, with two identical directional-force-transmitting pivot levers (1) linked by a transverse bar or bit (5), in this case flexible, and which is permanently fixed in the bore (4) existing at the oval end of the short arm (1A) of the directional-force-transmitting pivot levers (1), being firmly attached by a fastening element or the like. In this figure 2 the respective plates (6) which are fastened to each of the directional-force-transmitting pivot levers (1) are equally visible.

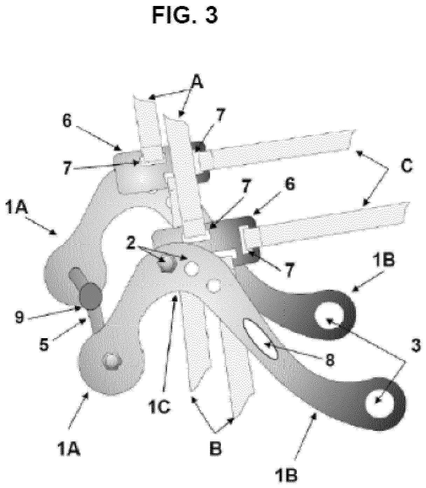

Figure 3 shows the whole working headstall with schematic segments of the strap that is crimped onto the plates (6) attached to the directional-force-transmitting pivot levers (1) in turn linked by the transverse bar (5) or bit, so that the noseband (A), the curb strap (B) and cheekpiece (C) pass through the strategically distributed and positioned rectangular perforations (7) provided for this purpose in the plates (6). In the through hole (3) located at the end of the long arms or shank (1B) of the directional-force-transmitting pivot levers (1) and in the central oval holes of said shank (1 B) the reins are engaged, not drawn In this figure. This figure shows the embodiment of the transverse bar or bit (5) with a central bulge or protuberance (9) which prevents the said transverse bar or bit (5) from touching the palate of the horse.

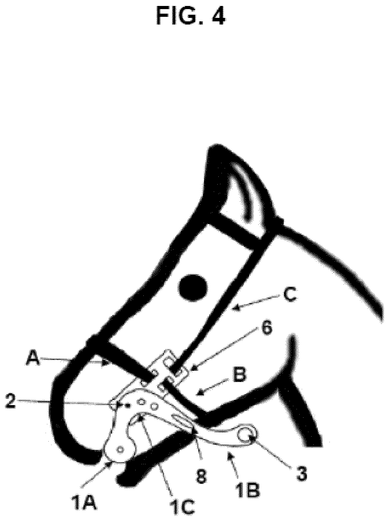

Figure 4 shows an example of positioning the working headstall on a horse, one of the directional-force-transmitting pivot levers (1) being visible, with the short arm (1A) holding the transverse bar or bit (5), The curved central section (1 C) or turning point and the long arm or shank (1 B). The plate (6) is fixed in one of the three aligned eyelets (2) and in the same plate (6) the half noseband (A) and the curb strap (B) are attached together with the standardized cheekpiece (C), the through hole (3) of the shank end (1 B) his center oval orifice remaining free to pass the reins.

Based on what is disclosed in this specification, the advantages of the new working headstall for horses are evident.

Technically it is a simple rig for its conformation on the basis of two identical directional-force-transmitting pivot levers joined by the flexible or rigid transverse bar or bit and linked to the two plates that act as a nexus of union with the straps, leaving the reins also attached to the above-mentioned directional-force-transmitting pivot levers. It is, therefore, an easy and quick headstall to put on the horse.

For its part, the bit, in its flexible shape, is more comfortable for the horse, avoiding that the inevitable frictions cause damages and injuries, especially when it presents its central bulge. In fact, the bit that remains floating in a certain position distributes the force between the tongue and the bars of the horse's mouth.

At an economic level, a low manufacturing cost is estimated, since only 3 parts are used - directional-force-transmitting pivot levers, plate and transverse bar or bit - to which the noseband, made as a half piece, and the curb strap are added.

From a standpoint of effectiveness is indisputable that the aim of facilitating control of the horse using a smaller but better focused force and with the points of force in a lower position is achieved, which affects the pressure is more uniform and fluid.

The new headstall allows the rider to make individual or joint forces. They are individual strengths that he performs, by traction, on the bit or the noseband. It will be a joint force that is carried out simultaneously on bit and noseband.

When the pivot point relative to the bit to place the position of the head is 180° with the noseband, the bit remains floating.

In a lateral rotation, when traction is carried out on the reins, the force is performed on the opposite side, in a smooth and natural way.

It is also more effective for the rider. For example, if using bit and fillet, the rider is forced to use four reins to exert two forces (one on the bit, the other on the fillet). With the new headstall, the two forces are exerted on the noseband and the bit with only one rein.

Thanks to the two through holes on the shank of the lever is possible to insert a bridge reins.

Regarding the bit, to be fixed at the end of the short arm of the lever, any accidental movement is prevented and therefore no risk of injury to the horse by a fortuitous pinch.

On the straps, the noseband is shaped as a half piece with a diameter as small as possible, around 8 mm. In the new headstall, the curb strap does not interfere with any traction or compression, it only serves to hold the noseband and for anchoring point for the string to tie the horse. Since the noseband is not linked to the bit, any sudden movement of the horse when attached does not affect the bit, thus avoiding any injury to the animal's mouth.

It is not considered necessary to make this description any longer for any expert in the matter to understand the scope of the invention and the advantages deriving from it. The materials, shape, size and arrangement of the elements will be susceptible of variation as long as this does not imply an alteration in the essentiality of the invention. The terms in which this report has been drawn up must always be taken in their broadest, non-restrictive sense.

## Claims

1. ^{a} Working headstall for horses, essentially **characterized in that** it is formed by two identical directional-force-transmitting pivot levers (1), each of which is connected to a substantially rectangular plate (6) and both directional-force-transmitting pivot levers (1) being connected and linked together by a transverse bar or bit (5.)

2. ^{a} Working headstall for horses, according to the claim 1, **characterized in that** the directional-force-transmitting pivot levers (1) have a S-shaped conformation, with a short arm (1A) and a long arm or shank (1 B) joined by a curved central section (1 C) acting as a pivot point and having three aligned eyelets (2), the long arm or shank (1 B) is equipped with a central oval through-hole (8) and another through-hole (3) at its end, both of a diameter sufficient for the passage of the reins, while the short arm (1A) is equipped with a bore (4) at its end.

3. ^{a} Working headstall for horses, according to the claims 1 and 2, **characterized in that** the shaft of the transverse bar or bit (5) is permanently secured in the bore (4) of the substantially oval end of the short arm (1A) of the directional-force-transmitting pivot levers (1).

4. ^{a} Working headstall for horses, according to the claim 1, **characterized in that** the substantially rectangular plate (6) has several strategically distributed and positioned perforations (7), also rectangular, which are crossed by horse holding straps, in particular a half noseband (A) and a curb strap (B), the plate (6) also having a through-hole for a nut that secures the plate (6) to the directional-force-transmitting pivot lever (1).

5. ^{a} Working headstall for horses, according to the claims 2 and 4, **characterized in that** the plate (6) is fixed in one of the three eyelets (2) present in the curved central section (1C) of the directional-force-transmitting pivot levers (1), varying in three positions or points of rotation 70°, 90° and 120°.

6. ^{a} Working headstall for horses, according to the claim 2, **characterized in that** the identical directional-force-transmitting pivot levers (1) are positioned as inverted levers, exerting a vertical pressure.

7. ^{a} Working headstall for horses, according to the claim 2, **characterized in that** the directional-force-transmitting pivot levers (1), thanks to their S-shaped conformation, make a rotation of 180° and the moment of force rests in the noseband (A).

8. ^{a} Working headstall for horses, according to the claims 1 and 3, **characterized in that** the transverse bar or bit (5) is placed in a floating position in the horse's mouth.

9. ^{a} Working headstall for horses, according to the claims 1 and 3, **characterized in that** the transverse bar or bit (5) is flexible.

10. ^{a} Working headstall for horses, according to the claims 1 and 3, **characterized in that** the transverse bar or bit (5) is rigid.

11. ^{a} Working headstall for horses, according to the claims 1, 3, 8 and 9, **characterized in that** the transverse bar or bit (5) has a central bulge or protuberance (9).

12. ^{a} Working headstall for horses, according to the claim 1, **characterized in that** the directional-force-transmitting pivot levers (1) and plates (6) are metallic and of little thickness.
